# EUROPÄISCHE PATENTSCHRIFT

(11) **EP 2 329 224 B1**
(45) Veröffentlichungstag und Bekanntmachung des Hinweises auf die Patenterteilung: **08.04.2020**
(21) Anmeldenummer: 09783550.8
(22) Anmeldetag: 29.09.2009
(51) Int. Cl.: G01D 5/04, B63H 25/36

(54) **VORRICHTUNG ZUR ERFASSUNG EINER WINKELPOSITION EINER STEUERWELLE**
DEVICE FOR DETECTING THE ANGULAR POSITION OF A STEERING SHAFT
DISPOSITIF DE DÉTECTION D'UNE POSITION ANGULAIRE D'UN ARBRE DE COMMANDE

(30) Priorität: 02.10.2008 DE 102008042596
(43) Veröffentlichungstag der Anmeldung: 08.06.2011
(73) Patentinhaber: ZF Friedrichshafen AG, 88046 Friedrichshafen (DE)
(72) Erfinder: ZOTTELE, Michele, I-38100 Trento (IT); PELLEGRINETTI, Andrea, I-37018 MALCESINE VR (IT)
(74) Vertreter: ZF Friedrichshafen AG
(86) Internationale Anmeldenummer: PCT/EP2009/062614
(87) Internationale Veröffentlichungsnummer: WO 2010/037744

(56) Entgegenhaltungen:
- DE-A1-102004 021 405
- DE-A1-102006 023 286
- US-A1- 2007 049 136
- US-A1- 2008 149 815

## Beschreibung

Die Erfindung betrifft einen Bootsantrieb nach dem Oberbegriff des Patentanspruches 1 sowie Vorrichtung zur Erfassung einer Winkelposition nach dem Oberbegriff des Patentanspruches 3.

Bekannte Innenbord-Bootsantriebe weisen eine unter Wasser angeordnete Vortriebs- und Steuereinheit auf, welche mit ein oder zwei Schrauben (Propellern) bestückt und um eine Hochachse schwenkbar ist. Durch die Verschwenkbarkeit des durch die Schrauben erzeugten Vortriebsvektors wird eine Steuerwirkung für das Boot erreicht. Die Verschwenkung erfolgt über eine Steuerwelle, welche von einer Steuereinrichtung angesteuert wird. Der jeweils anliegende Steuerwinkel (Winkel des Vortriebsvektors zur Mittschiffsachse) wird über einen Winkelsensor gemessen, wobei die Übertragung der Schwenkbewegung der Steuerwelle über Zahnräder an den Winkelsensor erfolgt. Nachteilig bei den bekannten Vorrichtungen zur Messung ist, dass die Übertragung der Drehbewegung mit einem Spiel behaftet ist, welches eine ungenaue Winkelanzeige ergibt.

Die US 2007/0049136 A1 offenbart ein Steuersystem für ein Boot mit einem ersten hierarchischen Steuermodul, und Sensoren, die mit einer Lenksteuervorrichtung verbunden sind, um ein der gewünschten Fahrtrichtung entsprechendes Steuersignal zu erzeugen.

Die DE 10 2004 021 405 A1 offenbart ein Lenksäulenmodul mit einem stationären Gehäuse, einer im Gehäuse drehbar gelagerten und mit einer Lenkspindel drehfest verbundenen Hülse, wobei die Hülse mit einer umlaufenden Verzahnung versehen ist und mit welcher ein Zahnrad kämmt.

Es ist Aufgabe der vorliegenden Erfindung, bei einem Bootsantrieb und einer Vorrichtung der eingangs genannten Art eine möglichst spielfreie Übertragung und eine genaue Winkelanzeige zu erhalten.

Die Aufgabe der Erfindung wird durch die Merkmale der unabhängigen Patentansprüche 1 und 3 gelöst. Vorteilhafte Ausgestaltungen ergeben sich aus den Unteransprüchen.

Erfindungsgemäß ist vorgesehen, dass die Steuerwelle und der Winkelsensor über ein Spiel reduzierendes Zwischenrad kinematisch miteinander verbunden sind, wobei das Zwischenrad einerseits mit einem Geberrad der Steuerwelle und andererseits mit einem Nehmerrad des Winkelsensors in Eingriff steht und wobei das Geber-, das Nehmer- und das Zwischenrad als Zahnräder ausgebildet sind, welche miteinander in Zahneingriff stehen. Ferner ist das Zwischenrad geteilt und weist zwei in Umfangsrichtung gegeneinander verschiebbare Scheiben (Scheibenräder) auf, welche in Umfangsrichtung elastisch verspannt sind, vorzugsweise durch in Umfangsrichtung wirkende Druckfedern. Beide Scheiben sind koaxial zueinander angeordnet und durch einen Bajonettverschluss miteinander verbunden. Mit dem Zwischenrad wird der Vorteil erreicht, dass ein Spiel in Umfangsrichtung, d. h. das Spiel zwischen den miteinander in Eingriff stehenden Zähnen reduziert oder eliminiert wird, da jeweils eine rechte und eine linke Flanke des Zwischenrades an beiden Flanken einer Zahnlücke im Geber- oder im Nehmerrad anliegen. Durch diese Ausschaltung des Umfangsspiels wird eine genaue Winkelanzeige der Steuerwelle erreicht.

Nach einer weiteren bevorzugten Ausführungsform ist das Zwischenrad zweifach geteilt und weist zwei äußere Scheibenräder und ein Mittelrad auf, wobei jeweils eine äußere Scheibe gegen das Mittelrad in Umfangsrichtung elastisch verspannt ist. Die äußeren Scheibenräder sind also jeweils in Umfangsrichtung gegen das Mittelrad verschiebbar. Der Zahneingriff mit dem Geberrad erfolgt durch das erste äußere Scheibenrad und das Mittelrad, und der Zahneingriff mit dem Nehmerrad erfolgt durch das zweite äußere Scheibenrad und das Mittelrad. Damit wird der Vorteil eines vollständigen Spielausgleiches, d. h. für Geber- und Nehmerrad erreicht - für den Fall, dass die Zahnlücken von Geber- und Nehmerrad toleranzbedingte Abweichungen in Umfangsrichtung aufweisen, z. B. Teilungsfehler.

Nach einer bevorzugten Ausführungsform erfolgt die Verspannung der Scheibenräder durch tangential angeordnete Druckfedern, welche sich jeweils an einem Scheibenrad bzw. an einem Scheibenrad und dem Mittelrad abstützen. Die Druckfedern lassen sich einfach montieren, indem sie in in Umfangsrichtung geformte Taschen eingelegt werden.

Ausführungsbeispiele der Erfindung sind in der Zeichnung dargestellt und werden im Folgenden näher beschrieben, wobei sich weitere Merkmale und/oder Vorteile aus der Zeichnung und/oder der Beschreibung ergeben können. Es zeigen
Fig. 1 einen Bootsantrieb nach dem Stand der Technik,
Fig. 2 einen Bootsantrieb mit Steuerwelle und erfindungsgemäßer Vorrichtung zur Winkelerfassung,
Fig. 3 ein Spiel reduzierendes Zwischenrad in Explosivdarstellung,
Fig. 4 das Zwischenrad in einer Draufsicht,
Fig. 5 das Zwischenrad in einer Schnittdarstellung,
Fig. 6 die erfindungsgemäße Vorrichtung zur Winkelerfassung in einer vergrößerten perspektivischen Schnittdarstellung und
Fig. 7 ein zweites Ausführungsbeispiel der Erfindung mit einem zweifach geteilten, Spiel reduzierenden Zwischenrad.

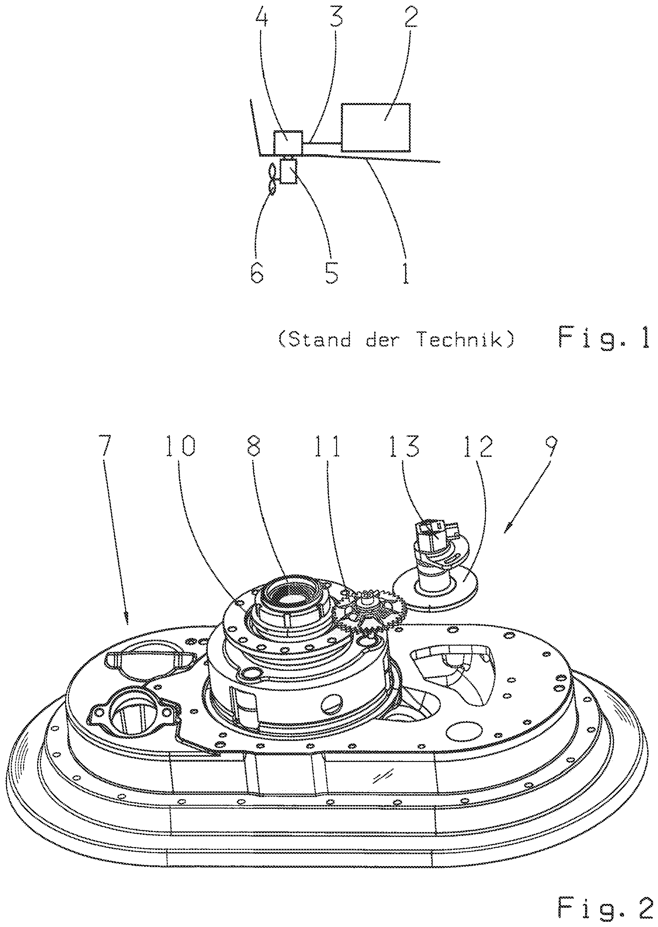

**Fig. 1** zeigt in schematischer Darstellung eine Antriebsanlage für einen Bootsrumpf 1 nach dem Stand der Technik. Innerhalb des Bootsrumpfes 1 ist eine Antriebsmaschine 2, z. B. ein Dieselmotor angeordnet, welcher über eine Antriebswelle 3 mit einem Getriebe 4 verbunden ist. Außerhalb des Rumpfes 1, d. h. unter Wasser ist eine Vortriebs- und Steuereinheit 5 mit einer Schiffsschraube 6 (Propeller 6) um eine nicht dargestellte Hochachse schwenkbar angeordnet. Die Drehbewegung der Antriebswelle 3 wird somit über je einen Winkeltrieb (Kegelradstufe) im Getriebe 4 und in der Vortriebs- und Steuereinheit 5 auf den Propeller 6 übertragen. Die Steuerwirkung für das Boot wird also durch Verschwenken des durch den Propeller 6 erzeugten Vortriebsvektors erzielt.

**Fig. 2** zeigt einen Ausschnitt eines Getriebeaggregats 7, welches Teil eines nicht dargestellten Bootsantriebes ist, welcher prinzipiell dem Bootsantrieb gemäß Fig. 1 entspricht. Innerhalb des Getriebeaggregates 7 ist eine Steuerwelle 8 angeordnet, welche eine unter Wasser befindliche Vortriebs- und Steuereinheit (vgl. Bezugzahl 5 in Fig. 1) zur Erzielung einer Steuerwirkung auf das Boot verschwenkt. Der Winkel, mit dem die Steuerwelle, beispielsweise gegenüber der Mittschiffsrichtung verschwenkt wird, im Folgenden Steuerwinkel genannt, wird durch eine Winkelmesseinrichtung 9 erfasst, welche folgende Komponenten umfasst: ein an der Steuerwelle 8 befestigtes Geberrad 10, ein Spiel reduzierendes Zwischenrad 11 und ein Nehmerrad 12, welches an einem handelsüblichen Winkelsensor 13 befestigt ist. Geberrad 10, Zwischenrad 11 und Nehmerrad 12 sind als Zahnräder ausgebildet und stehen miteinander in Zahneingriff, sodass die Schwenkbewegung der Steuerwelle 8 im gleichen Drehsinn auf das Nehmerrad 12 übertragen wird.

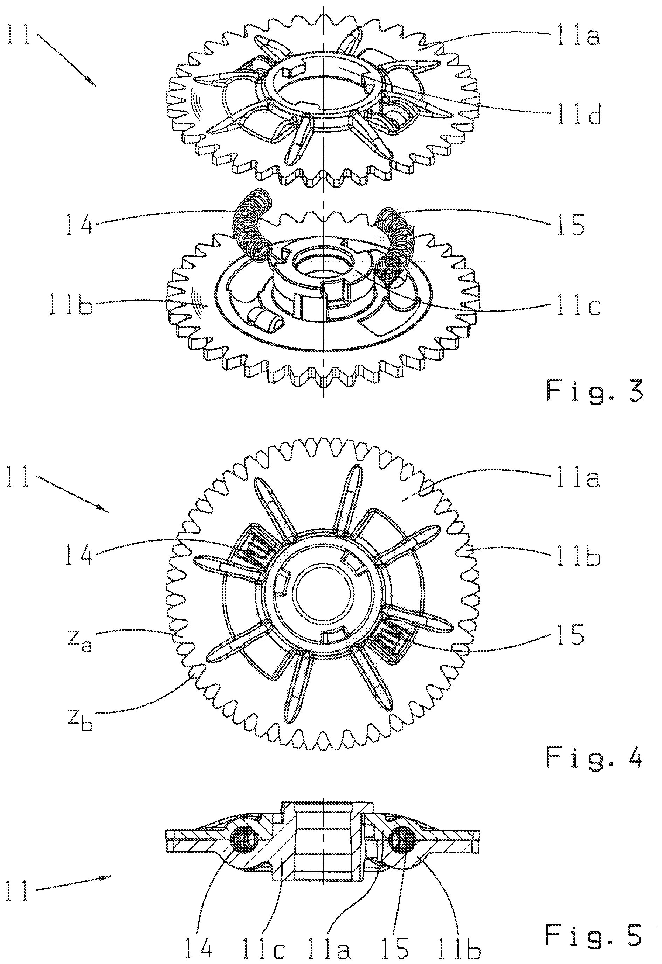

**Fig. 3** zeigt das Spiel reduzierende Zwischenrad 11 in einer vergrößerten Explosivdarstellung. Aus der Darstellung ist ersichtlich, dass das Zwischenrad 11 geteilt ist und ein erstes, oberes Scheibenrad 11a und ein zweites unteres Scheibenrad 11b mit einer Nabe 11c umfasst. Zwischen den Scheibenrädern, im Folgenden auch Scheiben 11a, 11b genannt, sind zwei in Umfangsrichtung geformte Schraubendruckfedern, kurz Druckfedern 14, 15 genannt, angeordnet. Die obere Scheibe 11a weist einen Nabenring 11d auf, welcher auf die Nabe 11c der unteren Scheibe 11b nach Art eines Bajonettverschlusses aufsteckbar und somit zentriert ist.

**Fig. 4** zeigt beide Scheiben 11a, 11b mit den Druckfedern 14, 15 in montiertem Zustand in einer Draufsicht. Beide Scheiben 11a, 11b weisen die gleiche Verzahnung auf, wobei die Zähne zₐ der oberen Scheibe 11a gegenüber den Zähnen z_{b} der unteren Scheibe 11b infolge der Wirkung der Druckfedern 14, 15 in Umfangsrichtung versetzt sind, d. h. auf Lücke stehen.

**Fig. 5** zeigt das Zwischenrad 11 in einem Schnitt, wobei die Aufnahme der Druckfedern 14, 15 in torusförmigen Ausnehmungen oder Taschen beider Scheiben 11a, 11b erkennbar ist.

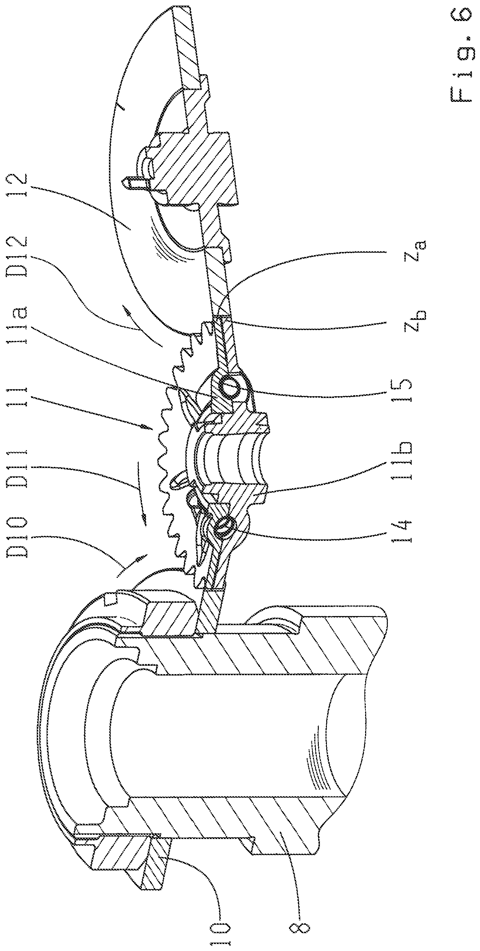

**Fig. 6** zeigt in einer vergrößerten, perspektivischen Schnittdarstellung den Eingriff des Zwischenrades 11 mit dem Geberrad 10 und dem Nehmerrad 12. Das Geberrad 10 ist drehfest auf der Steuerwelle 8 angeordnet. Man erkennt, dass die Zähne zₐ des oberen Scheibenrades 11a und die Zähne z_{b} des unteren Scheibenrades 11b sowohl mit dem Geberrad 10 als auch mit dem Nehmerrad 12 in Zahneingriff stehen. Die Wirkung des Spiel reduzierenden Zwischenrades 11 besteht darin, dass die in Eingriff befindlichen Zähne zₐ, z_{b} innerhalb einer Zahnlücke sowohl des Geberrades 10 als auch des Nehmerrades 12 in Umfangsrichtung gespreizt werden, sodass sie an beiden Zahnflanken der betreffenden Zahnlücke anliegen. Die Drehrichtung der Steuerwelle 8 ist beispielhaft durch einen Pfeil D10, die Drehrichtung des Zwischenrades 11 durch einen Pfeil D11 und die Drehrichtung des Nehmerrades 12 durch einen Pfeil D12 dargestellt. In diesem Falle liegt eine rechte Zahnflanke des treibenden Nehmerrades 10 an einer rechten Zahnflanke des oberen Scheibenrades 11a an. Die über die obere Scheibe 11a eingeleitete Drehbewegung wird infolge der Spreizwirkung der Federn 14, 15 durch die untere Scheibe 11b auf die Nehmerscheibe 12 übertragen, wobei eine linke Zahnflanke des Zahnes z_{b} an einer linken Zahnflanke des Nehmerrades 12 anliegt. Die Federn 14, 15 sind derart dimensioniert, dass sie das auftretende Drehmoment, welches relativ gering ist, spielfrei übertragen, d. h. eine Einfederung in Umfangsrichtung findet praktisch nicht statt. Durch diese Wirkung des Zwischenrades 11 wird die Drehbewegung der Steuerwelle 8 spielfrei auf das Nehmerrad 12 des Winkelsensors 13 übertragen, sodass eine genaue Erfassung des jeweils anliegenden Steuerwinkels möglich ist.

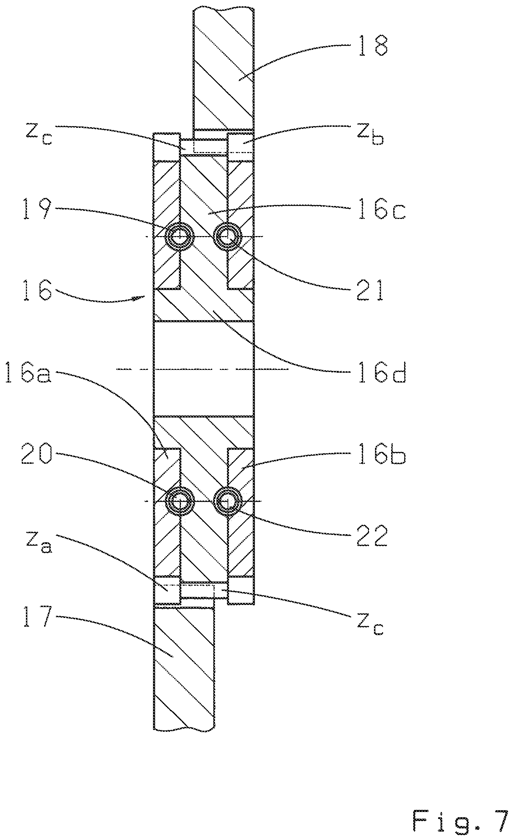

**Fig. 7** zeigt ein zweites Ausführungsbeispiel der Erfindung für ein Spiel reduzierendes Zwischenrad 16, welches mit einem Geberrad 17 und einem Nehmerrad 18 in Zahneingriff steht. Das Zwischenrad 16 ist zweifach geteilt, d. h. es umfasst ein erstes und ein zweites äußeres Scheibenrad 16a, 16b sowie ein Mittelrad 16c mit einer Nabe 16d, auf welcher die beiden äußeren Scheibenräder 16a, 16b zentriert sind. In Umfangsrichtung zwischen dem ersten äußeren Scheibenrad 16a und dem Mittelrad 16c sind Druckfedern 19, 20 und zwischen dem zweiten äußeren Scheibenrad 16b und dem Mittelrad 16c sind weitere Druckfedern 21, 22 angeordnet, sodass die beiden äußeren Scheibenräder 16a, 16b in Umfangsrichtung gegenüber das Mittelrad 16c verspannt sind. Die Darstellung zeigt, dass mit dem Geberrad 17 nur die Verzahnung zₐ des ersten äußeren Scheibenrades 16a sowie die Verzahnung z_{c} des Mittelrades 16c in Eingriff steht, während mit dem Nehmerrad 18 die Verzahnung z_{b} des zweiten äußeren Scheibenrades 16b sowie die Verzahnung z_{c} des Mittelrades 16c in Eingriff stehen. Durch das Zwischenrad 16, welches drei winkelbeweglich zueinander angeordnete und elastisch gegeneinander verspannte Zahnräder 16a, 16b, 16c umfasst, wird ein vollständiger Spielausgleich bei der Übertragung der Drehbewegung vom Geberrad 17 auf das Nehmerrad 18 erreicht. Es ist davon auszugehen, dass - obwohl gleiche Verzahnungen vorgesehen sind - toleranzbedingte Abweichungen, z. B. Teilungsfehler bei der Herstellung der Verzahnung auftreten, sodass eine Zahnlücke des Geberrades 17 in ihrer Teilung nicht genau einer Zahnlücke des Nehmerrades 18 entspricht. In diesem Falle ist es möglich, dass sich die beiden äußeren Scheibenräder 16a, 16b unabhängig voneinander in Umfangsrichtung spreizen können, sodass weder in einer Zahnlücke des Geberrades 17 noch in einer Zahnlücke des Nehmerrades 18 ein Umfangsspiel auftritt.

### Bezugszeichen

- 1: Bootsrumpf
- 2: Antriebsmotor
- 3: Antriebswelle
- 4: Getriebe
- 5: Vortriebs- und Steuereinheit
- 6: Propeller
- 7: Getriebeaggregat
- 8: Steuerwelle
- 9: Winkelmesseinrichtung
- 10: Geberrad
- 11: Zwischenrad
- 11a: erstes Scheibenrad
- 11b: zweites Scheibenrad
- 11c: Nabe
- 11d: Nabenring
- 12: Nehmerrad
- 13: Winkelsensor
- 14: Druckfeder
- 15: Druckfeder
- 16: Zwischenrad
- 16a: erstes äußeres Scheibenrad
- 16b: zweites äußeres Scheibenrad
- 16c: Mittelrad
- 16d: Nabe
- 17: Geberrad
- 18: Nehmerrad
- 19: Druckfeder
- 20: Druckfeder
- 21: Druckfeder
- 22: Druckfeder

- D10: Drehrichtung, Rad 10
- D11: Drehrichtung, Rad 11
- D12: Drehrichtung, Rad 12
- zₐ: Zahn, Scheibenrad 11a, 16a
- z_{b}: Zahn, Scheibenrad 11b, 16b
- z_{c}: Zahn, Mittelrad 16c

## Patentansprüche

1. Bootsantrieb, umfassend eine Steuereinrichtung mit einer Steuerwelle (8), welche eine unter Wasser befindliche Vortriebs- und Steuereinheit zur Erzielung einer Steuerwirkung auf das Boot um einen Steuerwinkel verschwenkt, sowie eine Vorrichtung zur Erfassung des Steuerwinkels mittels eines Winkelsensors (13), **dadurch gekennzeichnet, dass** die Steuerwelle (8) mit einem Geberrad (10) verbunden ist, der Winkelsensor (13) ein Nehmerrad (12) aufweist und zwischen Geberrad (10) und Nehmerrad (12) ein Zwischenrad (11) angeordnet ist, wobei Geber-, Zwischen- und Nehmerrad als miteinander in Zahneingriff stehende Zahnräder (10, 11, 12) ausgebildet sind, wobei das Zwischenrad (11) geteilt ist und ein erstes Scheibenrad (11a) und ein zweites Scheibenrad (11b) umfasst und die koaxial angeordneten Scheibenräder (11a, 11b) elastisch gegeneinander verspannt sind, und wobei beide Scheibenräder (11a, 11b) gleiche Verzahnungen (zₐ, z_{b}) aufweisen und mit dem Geberrad (10) sowie dem Nehmerrad (12) in Zahneingriff stehen.

2. Bootsantrieb nach Anspruch 1, **dadurch gekennzeichnet, dass** das zweite Scheibenrad (11b) eine Nabe (11c) aufweist, auf welcher das erste Scheibenrad (11a) angeordnet und durch einen Bajonettverschluss gehalten ist.

3. Bootsantrieb nach Anspruch 1 oder 2, **dadurch gekennzeichnet, dass** die Steuerwelle (8) und der Winkelsensor (13) über das Spiel reduzierende Zwischenrad (11, 16), welches in Eingriff mit dem Geberrad (10) der Steuerwelle (8) und dem Nehmerrad (12) des Winkelsensors (13) steht, kinematisch miteinander verbunden sind, und dass das Zwischenrad (16) zweifach geteilt ist und zwei äußere Scheibenräder (16a, 16b) sowie ein Mittelrad (16c) umfasst, wobei die äußeren Scheibenräder (16a, 16b) jeweils in Umfangsrichtung gegen das Mittelrad (16c) elastisch verspannt sind.

4. Bootsantrieb nach Anspruch 3, **dadurch gekennzeichnet, dass** die äußeren Scheibenräder (16a, 16b) und das Mittelrad (16c) gleiche Verzahnungen (zₐ, z_{b}, z_{c}) aufweisen und dass das erste äußere Scheibenrad (16a) sowie das Mittelrad (16c) mit dem Geberrad (17) und das zweite äußere Scheibenrad (16b) sowie das Mittelrad (16c) mit dem Nehmerrad (18) in Zahneingriff stehen.

5. Bootsantrieb nach Anspruch 4, **dadurch gekennzeichnet, dass** das Mittelrad (16c) eine Nabe (16d) aufweist, auf welcher die beiden äußeren Scheibenräder (16a, 16b) koaxial angeordnet sind.

6. Bootsantrieb nach einem der Ansprüche 3 bis 5, dadurch **gekennzeic hnet**, dass die Verspannung in Umfangsrichtung durch tangential angeordnete Druckfedern (14, 15; 19, 20, 21, 22) erfolgt.

## Claims

1. Marine propulsion means, comprising a control device having a control shaft (8) which pivots an underwater propulsion and control unit in order to achieve a control action on the boat by a control angle, and an apparatus for detecting the control angle by means of an angle sensor (13), **characterized in that** the control shaft (8) is connected to a master wheel (10), the angle sensor (13) has a slave wheel (12), and an intermediate wheel (11) is arranged between the master wheel (10) and the slave wheel (12), the master, intermediate and slave wheels being configured as gearwheels (10, 11, 12) which are in tooth engagement with one another, the intermediate wheel (11) being split and comprising a first disc wheel (11a) and a second disc wheel (11b), and the coaxially arranged disc wheels (11a, 11b) being braced against one another elastically, and the two disc wheels (11a, 11b) having identical toothing systems (zₐ, z_{b}) and being in tooth engagement with the master wheel (10) and the slave wheel (12).

2. Marine propulsion means according to Claim 1, **characterized in that** the second disc wheel (11b) has a hub (11c), on which the first disc wheel (11a) is arranged and is held by way of a bayonet lock.

3. Marine propulsion means according to Claim 1 or 2, **characterized in that** the control shaft (8) and the angle sensor (13) are connected kinematically to one another via the play-reducing intermediate wheel (11, 16) which is in engagement with the master wheel (10) of the control shaft (8) and the slave wheel (12) of the angle sensor (13), and **in that** the intermediate wheel (16) is split twice and comprises two outer disc wheels (16a, 16b) and a centre wheel (16c), the outer disc wheels (16a, 16b) being braced elastically in each case in the circumferential direction against the centre wheel (16c).

4. Marine propulsion means according to Claim 3, **characterized in that** the outer disc wheels (16a, 16b) and the centre wheel (16c) have identical toothing systems (zₐ, z_{b}, z_{c}), and **in that** the first outer disc wheel (16a) and the centre wheel (16c) are in tooth engagement with the master wheel (17), and the second outer disc wheel (16b) and the centre wheel (16c) are in tooth engagement with the slave wheel (18).

5. Marine propulsion means according to Claim 4, **characterized in that** the centre wheel (16c) has a hub (16d), on which the two outer disc wheels (16a, 16b) are arranged coaxially.

6. Marine propulsion means according to one of Claims 3 to 5, **characterized in that** the bracing in the circumferential direction takes place by way of tangentially arranged compression springs (14, 15; 19, 20, 21, 22).

## Revendications

1. Mécanisme de propulsion de bateau, comprenant un dispositif de commande doté d'un arbre de commande (8), lequel fait pivoter une unité de propulsion et de commande qui se trouve sous l'eau d'un angle de commande donné en vue d'obtenir un effet de commande sur le bateau, ainsi qu'un arrangement destiné à détecter l'angle de commande au moyen d'un capteur d'angle (13), **caractérisé en ce que** l'arbre de commande (8) est relié à une roue transmettrice (10), le capteur d'angle (13) possède une roue réceptrice (12) et une roue intermédiaire (11) est disposée entre la roue transmettrice (10) et la roue réceptrice (12), les roues transmettrice, intermédiaire et réceptrice étant réalisées sous la forme de roues dentées (10, 11, 12) engrenées les unes avec les autres, la roue intermédiaire (11) étant divisée et comportant une première roue à disque (11a) et une deuxième roue à disque (11b) et les roues à disque (11a, 11b) disposées de manière coaxiale étant contraintes élastiquement l'une contre l'autre, et les deux roues à disque (11a, 11b) possédant les mêmes dentures (zₐ, z_{b}) et étant engrenées avec la roue transmettrice (10) ainsi que la roue réceptrice (12).

2. Mécanisme de propulsion de bateau selon la revendication 1, **caractérisé en ce que** la deuxième roue à disque (11b) possède un moyeu (11c) sur lequel la première roue à disque (11a) est disposée et maintenue par un verrouillage à baïonnette.

3. Mécanisme de propulsion de bateau selon la revendication 1 ou 2, **caractérisé en ce que** l'arbre de commande (8) et le capteur d'angle (13) sont reliés cinématiquement l'un à l'autre par le biais de la roue intermédiaire (11, 16) réduisant le jeu, laquelle est en prise avec la roue transmettrice (10) de l'arbre de commande (8) et la roue réceptrice (12) du capteur d'angle (13), et **en ce que** la roue intermédiaire (16) est divisée deux fois et comporte deux roues à disque extérieures (16a, 16b) ainsi qu'une roue centrale (16c), les roues à disque extérieures (16a, 16b) étant respectivement contraintes élastiquement contre la roue centrale (16c) dans la direction périphérique.

4. Mécanisme de propulsion de bateau selon la revendication 3, **caractérisé en ce que** les roues à disque extérieures (16a, 16b) et la roue centrale (16c) possèdent les mêmes dentures (zₐ, z_{b}, z_{c}) et **en ce que** la première roue à disque extérieure (16a) ainsi que la roue centrale (16c) sont engrenées avec la roue transmettrice (17) et la deuxième roue à disque extérieure (16b) ainsi que la roue centrale (16c) sont engrenées avec la roue réceptrice (18).

5. Mécanisme de propulsion de bateau selon la revendication 4, **caractérisé en ce que** la roue centrale (16c) possède un moyeu (16d) sur lequel les deux roues à disque extérieures (16a, 16b) sont disposées de manière coaxiale.

6. Mécanisme de propulsion de bateau selon l'une des revendications 3 à 5, **caractérisé en ce que** la contrainte dans la direction périphérique est effectuée par des ressorts de compression (14, 15 ; 19, 20, 21, 22) disposés de manière tangentielle.
